# EUROPEAN PATENT APPLICATION

(11) **EP 4 818 120 A1**
(43) Date of publication of application: **07.10.2026**
(21) Application number: 24897571.6
(22) Date of filing: 27.11.2024
(51) Int. Cl.: C01B 32/30, B01J 20/20, B01J 20/28

(54) **CARBONACEOUS MATERIAL, METHOD FOR PRODUCING SAME, AND METHOD FOR ADSORBING PALLADIUM COMPLEX**

(30) Priority: 29.11.2023 JP 2023201657
(71) Applicant: Osaka Gas Chemicals Co., Ltd., Osaka-shi, Osaka 550-0023 (JP)
(72) Inventor: FUJII, Noriko, Osaka-shi, Osaka 550-0023 (JP); SEIKE, Naoya, Osaka-shi, Osaka 550-0023 (JP); UEDA, Sakae, Osaka-shi, Osaka 550-0023 (JP); ASADA, Takuya, Osaka-shi, Osaka 550-0023 (JP); KOBAYASHI, Aya, Osaka-shi, Osaka 550-0023 (JP)
(74) Representative: Marks & Clerk LLP
(86) International application number: PCT/JP2024/041932
(87) International publication number: WO 2025/115887

(57) **Abstract**

The carbonaceous material of the present invention has a percentage of mesopores of 6.4% or more and 50.0% or less, a Reactive Black 5 value of 1.0 g/L or more and 8.0 g/L or less, and an iodine number of 1,000 mg/g or more and 1,600 mg/g or less.

## Description

### TECHNICAL FIELD

The present invention relates to a carbonaceous material, a method for producing the same, and a method for adsorbing a palladium complex.

### BACKGROUND ART

In organic synthetic chemistry, homogeneous catalysts containing palladium are widely used for the purpose of promoting reactions such as formation of carbon-carbon bonds and asymmetric hydrogenation. These palladium catalysts can efficiently promote the reactions by being dissolved in a solution. After completion of the reactions, the palladium catalysts can be removed by crystallization, distillation, or the like, but when the products are used for electronic materials, pharmaceuticals, and the like, it is necessary to reduce the contents of the palladium catalysts to a sufficiently low level by removing the palladium catalysts from the products.

As a method for removing the palladium catalysts, for example, Patent Document 1 discloses a method in which the solution after the organic reaction is treated with activated alumina having a specific surface area of 50 m²/g or more and 400 m²/g or less.

Patent Document 2 describes a method for reducing residual palladium in an active pharmaceutical ingredient, in which a tertiary phosphine is added to a mixed solution of the active pharmaceutical ingredient, a solubilizing agent, and water, and a poor solvent is further added to crystallize the active pharmaceutical ingredient, thereby reducing the residual palladium.

Patent Document 3 describes a metal removal adsorbent for use in removal of metal components such as palladium catalysts dissolved in organic solvents, and the metal removal adsorbent has a specific surface area of 1300 m²/g or more and a mean pore size of 1.8 nm or more.

### CITATION LIST

### PATENT DOCUMENTS

Patent Document 1: Japanese Unexamined Patent Publication No. 2008-260704
Patent Document 2: Japanese Unexamined Patent Publication No. 2011-57602
Patent Document 3: Japanese Unexamined Patent Publication No. 2017-177047

### SUMMARY OF THE INVENTION

### TECHNICAL PROBLEM

However, in the method described in Patent Document 1, the solution for removing palladium catalysts is an organic reaction solution using a catalyst containing a phosphorus-based ligand and a palladium compound. Therefore, the removal effect is not sufficient for a catalyst such as palladium acetate, which does not contain a phosphorus-based ligand.

In the method described in Patent Document 2, a 3-substituted phosphine that forms a complex with residual palladium is added to a solution to remove the complex of the tertiary phosphine and the residual palladium. However, in the method described in Patent Document 2, it is difficult to remove palladium, which is difficult to exchange ligands with tertiary phosphine, such as a palladium complex having a multidentate ligand. In addition, as a result of residual tertiary phosphine, there is a concern that the target product may instead be contaminated.

Patent Document 3 describes a method for adsorbing a palladium catalyst by activated carbon, and indicates that high removal performance is exhibited by setting the pore characteristics and the amount of surface functional groups of the adsorbent to specific ranges with respect to palladium acetate which is a divalent palladium complex. However, Patent Document 3 does not show effectiveness for a zero-valent palladium complex, and it is hard to say that the activated carbon described in Patent Document 3 can be applied to the removal of various palladium complexes such as a palladium catalyst.

The present invention has been made in view of such problems, and is aimed to provide a carbonaceous material which exhibits high adsorption performance for various palladium complexes, a method for producing the same, and a method for adsorbing a palladium complex.

### SOLUTION TO THE PROBLEM

As a result of intensive studies to accomplish aim described above, the present inventors have found that a carbonaceous material in which the percentage of mesopores, the Reactive Black 5 value, and the iodine number are in the respective specific ranges exhibits high adsorption performance for various palladium complexes, thereby completing the present invention.

The present invention includes the following embodiments.
[1] A carbonaceous material having a percentage of mesopores of 6.4% or more and 50.0% or less, a Reactive Black 5 value of 1.0 g/L or more and 8.0 g/L or less, and an iodine number of 1,000 mg/g or more and 1,600 mg/g or less.
[2] The carbonaceous material of [1], wherein a pore volume of the mesopores determined by a BJH method from an N₂ adsorption isotherm at -196°C is 0.16 cm³/g or more and 0.60 cm³/g or less.
[3] The carbonaceous material of [1], wherein a specific surface area determined by a BET method from an N₂ adsorption isotherm at -196°C is 950 m²/g or more and 1,700 m²/g or less.
[4] The carbonaceous material of [1], wherein a specific surface area determined by a BJH method from an N₂ adsorption isotherm at -196°C is 23 m²/g or more and 500 m²/g or less.
[5] The carbonaceous material of [1], wherein a pH is 4.5 or more and 9.5 or less.
[6] The carbonaceous material of [1], wherein a tapped bulk density measured by a tapping method is 0.20 g/mL or more and 0.55 g/mL or less.
[7] The carbonaceous material of any one of [1] to [6], for use in adsorption of a zero-valent palladium complex and/or a divalent palladium complex in an organic solvent.
[8] A method for producing the carbonaceous material of any one of [1] to [6], the method including: carbonizing a raw material to obtain a carbonized material; and subjecting the carbonized material to an activation treatment to obtain an activated product.
[9] The method of [8], further including: washing the activated product.
[10] The method of [8], wherein the raw material is at least one selected from the group consisting of coconut shells and wood flour.
[11] A method for adsorbing a palladium complex, the method including: adsorbing a palladium complex on the carbonaceous material of any one of [1] to [6].

### ADVANTAGES OF THE INVENTION

According to the present invention, a carbonaceous material which exhibits high adsorption performance for various palladium complexes, a method for producing the same, and a method for adsorbing a palladium complex can be provided.

### BRIEF DESCRIPTION OF THE DRAWINGS

[FIG. 1] In FIG. 1, I is a schematic cross-sectional view of a rotary kiln, and II is a schematic side view of the rotary kiln.
[FIG. 2] FIG. 2 is a schematic cross-sectional view illustrating the rotary kiln.

### DESCRIPTION OF EMBODIMENTS

An embodiment of the present invention (hereinafter simply referred to as "the present embodiment") will be described in detail below. The present embodiment described below is an example for explaining the present invention, and the present invention is not limited to the present embodiment.

### [Carbonaceous Material]

A carbonaceous material of the present embodiment has a percentage of mesopores of 6.4% or more and 50.0% or less, a Reactive Black 5 value of 1.0 g/L or more and 8.0 g/L or less, and an iodine number of 1,000 mg/g or more and 1,600 mg/g or less.

By having such features, the carbonaceous material exhibits high adsorption performance for various palladium complexes such as a palladium catalyst. Therefore, by using the carbonaceous material of the present embodiment, it is possible to suitably remove the palladium complex in various applications.

The percentage of mesopores of the carbonaceous material is 6.4% or more and 50.0% or less. When the percentage of mesopores is within the above range, the carbonaceous material exhibits high adsorption performance for the palladium complex. By having a percentage of mesopores of 6.4% or more, the carbonaceous material has a high pore ratio effective for large molecular-size palladium complexes, and the adsorption performance is remarkably improved. By having a percentage of mesopores of 50.0% or less, the pore size of the carbonaceous material does not become excessively large, thereby facilitating control of pores that adsorb palladium complexes.

According to the classification standards of International Union of Pure and Applied Chemistry (IUPAC), the pores of a carbonaceous material described in the present specification are classified into micropores having a pore size below 2.0 nm, mesopores having a pore size of 2.0 nm or more and 50.0 nm or less, and macropores having a pore size larger than 50.0 nm. The mesopores are pores larger than the micropores, and are effective for adsorption of a palladium complex having a large molecular size.

In the present specification, the percentage of mesopores in the carbonaceous material is determined as the ratio of the specific surface area determined by the BJH method from the N₂ adsorption isotherm at -196°C (hereinafter also simply referred to as the "BJH specific surface area") to the specific surface area determined by the BET method from the N₂ adsorption isotherm at -196°C (hereinafter also simply referred to as the "BET specific surface area"). The mesopores are relatively large pores among the pores of the carbonaceous material contributing to the adsorption. That is, it is indicated that the larger the percentage of mesopores, the better the adsorption performance for a palladium complex having a large molecular size. The specific method for measuring and calculating the percentage of the mesopores is described in Examples.

The percentage of mesopores is preferably 10.0% or more and 40.0% or less, more preferably 15.0% or more and 35.0% or less, because the carbonaceous material exhibits higher adsorption performance for various palladium complexes.

The Reactive Black 5 value of the carbonaceous material is 1.0 g/L or more and 8.0 g/L or less. Reactive Black 5 is a dye represented by the following formula (1), and is also referred to as C.I. Reactive Black-5.

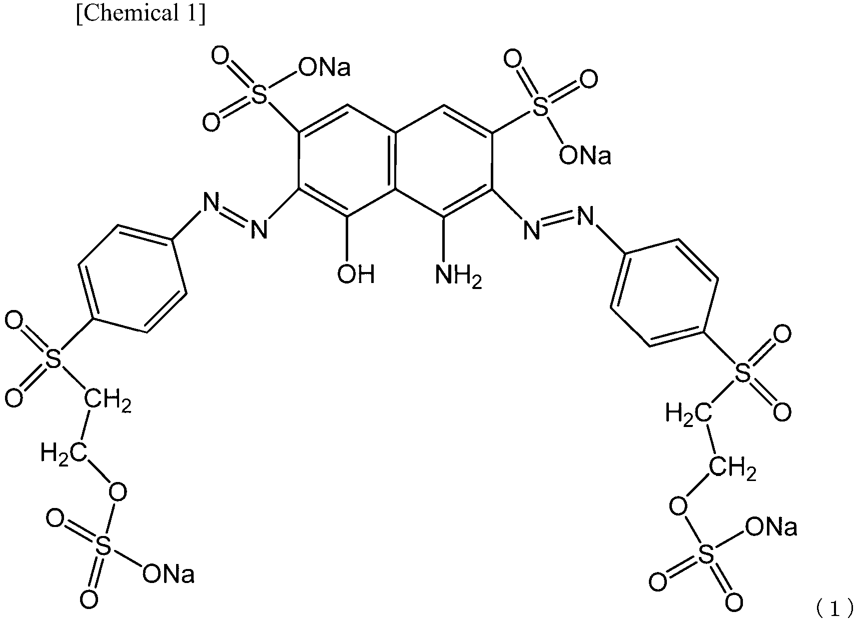

Reactive Black 5 has a large molecular weight of 995.88 and a bulky structure, and thus, the Reactive Black 5 value is used as an index of the adsorption characteristics for palladium complexes having large molecular sizes. When the Reactive Black 5 value is within the above range, the carbonaceous material exhibits high adsorption performance for various palladium complexes. By having a Reactive Black 5 value of 1.0 g/L or more, the carbonaceous material can suitably maintain an effective pore volume for small molecular-size palladium complexes while securing the pore volume for suitably adsorbing large molecular-size palladium complexes, and therefore the adsorption performance is remarkably improved. By having a Reactive Black 5 value of 8.0 g/L or less, the carbonaceous material can suitably maintain an effective pore volume for large molecular-size palladium complexes. Therefore, a carbonaceous material which exhibits high adsorption performance for palladium complexes having a particularly large molecular sizes can be obtained.

The Reactive Black 5 value can be calculated, for example, as follows. Specifically, first, a test solution containing Reactive Black 5 and a residual solution obtained by mixing the carbonaceous material with the test solution to cause the carbonaceous material to sufficiently adsorb Reactive Black 5 and removing the carbonaceous material that adsorbed Reactive Black 5 are prepared, and the absorbance of each solution is measured with an ultraviolet and visible spectrophotometer at a wavelength of 594 nm and an optical path length (cell length) of 10 mm. Then, the residual ratio (%) of Reactive Black 5 contained in the residual solution and the adsorption amount (/g) of Reactive Black 5 per g of the carbonaceous material are calculated using the absorbances. Using these values, the Reactive Black 5 value (g/L) is calculated as the amount of the carbonaceous material required to remove 99% of Reactive Black 5 in a 1 L test solution. For the measurement of the Reactive Black 5 value, it is preferable to use a carbonaceous material having a 50% particle size (D50) in a volume-based cumulative distribution controlled to 9.0 µm or more and 11.0 µm or less. In the present specification, the 50% particle size (D50) refers to a value measured as a volume-based median particle size using a laser diffraction particle size analyzer. The specific method for measuring and calculating the Reactive Black 5 value is described in the Examples.

The Reactive Black 5 value is preferably 1.3 g/L or more and 7.0 g/L or less, more preferably 1.5 g/L or more and 5.0 g/L or less, much more preferably 1.6 g/L or more 4.0 g/L or less, still more preferably 1.7 g/L or more and 2.3 g/L or less, because the carbonaceous material exhibits higher adsorption performance for various palladium complexes.

The iodine number of the carbonaceous material is 1,000 mg/g or more and 1,600 mg/g or less.

The iodine number is an index of the surface area of the pores of the carbonaceous material capable of physically adsorbing the palladium complex. When the iodine number of the carbonaceous material is within the above range, the carbonaceous material exhibits high adsorption performance for a palladium complex. When the iodine number is 1,000 mg/g or more, the surface area contributing to physical adsorption is sufficiently present, and the adsorption performance for the palladium complex is significantly improved. When the iodine number is 1,600 mg/g or less, the pores of the carbonaceous material do not become too large, and the pores adsorbing the palladium complex are easily controlled.

The iodine number is measured and calculated in accordance with JIS K 1474 (2014). The specific method for measuring and calculating the iodine number is described in the Examples.

The iodine number is preferably 1,030 mg/g or more and 1,570 mg/g or less, more preferably 1,055 mg/g or more and 1,550 mg/g or less, and much more preferably 1,100 mg/g or more and 1,350 mg/g or less, because the carbonaceous material exhibits higher adsorption performance for various palladium complexes.

In the carbonaceous material, the pore volume of mesopores determined by the BJH method from the N₂ adsorption isotherm at -196°C (hereinafter also simply referred to as the "mesopore volume") is preferably 0.16 cm³/g or more and 0.60 cm³/g or less. When the mesopore volume is within the above range, the carbonaceous material tends to be able to realize adsorption performance for various palladium complexes at a higher level. When the mesopore volume is 0.16 cm³/g or more, the carbonaceous material can have a lot of relatively large pores effective for adsorption of a palladium complex. Therefore, the carbonaceous material tends to exhibit high palladium adsorption performance. When the mesopore volume is 0.60 cm³/g or less, the pores of the carbonaceous material are not excessively large, and the carbonaceous material can have a lot of pores effective for adsorption of palladium complex. Therefore, the carbonaceous material tends to exhibit high palladium adsorption performance. The specific method for measuring and calculating the mesopore volume is described in the Examples.

The mesopore volume is preferably 0.20 cm³/g or more and 0.59 cm³/g or less, more preferably 0.26 cm³/g or more and 0.58 cm³/g or less, much more preferably 0.30 cm³/g or more and 0.57 cm³/g or less, still more preferably 0.35 cm³/g or more and 0.56 cm³/g or less, because the carbonaceous material tends to realize adsorption performance for various palladium complexes at an even higher level.

The carbonaceous material has a specific surface area of preferably 950 m²/g or more and 1,700 m²/g or less determined by the BET method from the N₂ adsorption isotherm at - 196°C (hereinafter, also simply referred to as a "BET specific surface area"). The BET specific surface area is an index indicating the degree of progress of activation of the carbonaceous material. When the BET specific surface area is within the above range, the carbonaceous material tends to be able to realize adsorption performance for various palladium complexes at a higher level. When the BET specific surface area is 950 m²/g or more, the carbonaceous material tends to have a sufficient surface area contributing to physical adsorption and to obtain high adsorption performance for the palladium complex. When the BET specific surface area is 1,700 m²/g or less, the pores of the carbonaceous material are not excessively large, and the carbonaceous material tends to have a lot of pores effective for adsorption of the palladium complex. The specific method for measuring and calculating the BET specific surface area is described in the Examples.

The BET specific surface area is preferably 1,000 m²/g or more and 1,670 m²/g or less, more preferably 1,020 m²/g or more and 1,650 m²/g or less, much more preferably 1,100 m²/g or more and 1,550 m²/g or less, still more preferably 1,330 m²/g or more and 1,500 m²/g or less, because the carbonaceous material tends to realize adsorption performance for various palladium complexes at an even higher level.

The carbonaceous material has a specific surface area of 23 m²/g or more and 500 m²/g or less determined by the BJH method from the N₂ adsorption isotherm at -196°C (hereinafter, also simply referred to as a "BJH specific surface area"). The BJH specific surface area is an index indicating the amount of mesopores in the carbonaceous material. When the BJH specific surface area is within the above range, the carbonaceous material tends to be able to realize adsorption performance for various palladium complexes at a higher level. When the BJH specific surface area is 23 m²/g or more, the carbonaceous material can have a large surface area of relatively large mesopores capable of physically adsorbing palladium complexes. Therefore, the carbonaceous material tends to exhibit high palladium adsorption performance. When the BJH specific surface area is 500 m²/g or less, the pores of the carbonaceous material are not excessively large, and the carbonaceous material tends to have a large surface area of pores effective for adsorption of palladium complexes. Therefore, the carbonaceous material tends to exhibit high palladium adsorption performance. The specific method for measuring and calculating the BJH specific surface area is described in the Examples.

The BJH specific surface area is preferably 25 m²/g or more and 470 m²/g or less, more preferably 50 m²/g or more and 450 m²/g or less, much more preferably 100 m²/g or more and 430 m²/g or less, still more preferably 150 m²/g or more and 420 m²/g or less, even more preferably 250 m²/g or more and 410 m²/g or less, because the carbonaceous material tends to realize adsorption performance for various palladium complexes at an even higher level.

The pH of the carbonaceous material is preferably 4.5 or more and 9.5 or less. In the present embodiment, the pH is an index indicating the electrical characteristics of the carbonaceous material. When the pH is within the above range, the carbonaceous material tends to have less electrical bias on the surface thereof. Therefore, the carbonaceous material is less likely to be affected by the electrical characteristics of the palladium complex, and tends to be able to realize adsorption performance for various palladium complexes at a higher level. The pH can be measured using a known pH meter, and for specific measurement and calculation methods, reference may be made to the Examples.

The present inventors have not clarified why the carbonaceous material having a pH in the above range further improves the adsorption performance of the carbonaceous material, but presume as follows.

That is, the pH being 4.5 or more and 9.5 or less means that, when the carbonaceous material is immersed in water, the hydrogen ion concentration in the water is in the range of 10^{-4.5} mol/L or more and 10^{-9.5} mol/L or less. This indicates that, for example, even when the carbonaceous material has an acid-labile group on its surface, the amount of hydrogen ions liberated from the group is sufficiently small. In addition, for example, even in the case where the carbonaceous material contains a metal hydroxide or the like adsorbed on its surface as an impurity, the amount of hydroxide ions liberated from the metal hydroxide is sufficiently small.

From this, it can be said that when the pH is in the range of 4.5 or more and 9.5 or less, the surface of the carbonaceous material is substantially electrically neutral, and the surface is in a more hydrophobic state. Therefore, the carbonaceous material has further improved physical adsorption characteristics for electrically neutral substances, and for example, the adsorption performance is more excellent even for an electrically neutral palladium complex such as bis(dibenzylideneacetone)palladium(0).

When the pH is in the range of 4.5 or more and 9.5 or less, most of the acid-labile groups present on the surface of the carbonaceous material are present without being dissociated. Such groups can, for example, react favorably with relatively strongly acidic metal ions, such as palladium(II) ions, and form metal-oxygen bonds, such as Pd-O bonds, while dissociating hydrogen ions. Therefore, the carbonaceous material exhibits excellent adsorption performance even for a palladium(II) complex having relatively strong acidity such as palladium acetate.

From the above, it is presumed that when the pH is in the range of 4.5 or more and 9.5 or less, the carbonaceous material has more excellent adsorption characteristics for an electrically neutral palladium complex and also for a palladium(II) complex having relatively strong acidity, and therefore, the carbonaceous material can realize adsorption characteristics for various palladium complexes at a higher level. Examples of the acid-labile group include a hydroxyl group and a carboxyl group. However, the reason is not limited to this.

The pH is preferably 5.0 or more and 9.0 or less, more preferably 5.5 or more and 8.5 or less, much more preferably 6.0 or more and 8.0 or less, because the carbonaceous material tends to realize adsorption performance for various palladium complexes at an even higher level.

In the carbonaceous material, the tapped bulk density measured by the tapping method (hereinafter also simply referred to as "tapped bulk density") is preferably 0.20 g/mL or more and 0.55 g/mL or less. The tapped bulk density tends to be greatly affected by the pore volume of the carbonaceous material. Therefore, when the bulk density of the carbonaceous material having a 50% particle size (D50), based on a volume-based cumulative distribution, of 9.0 µm to 11.0 µm is measured, the value of the bulk density serves as an index of the pore volume of the carbonaceous material. When the tapped bulk density is within the above range, the carbonaceous material tends to be able to realize adsorption performance for various palladium complexes at a higher level. When the tapped bulk density is 0.20 g/mL or more, pores contributing to physical adsorption tend to be sufficiently present. Therefore, the carbonaceous material tends to exhibit higher adsorption performance for the palladium complex. When the tapped bulk density is 0.55 g/mL or less, the pores of the carbonaceous material do not become too large, and the carbonaceous material can have many pores effective for adsorption of the palladium complex. Therefore, the carbonaceous material tends to exhibit high palladium adsorption performance. The specific method for measuring and calculating the tapped bulk density is described in the Examples.

The tapped bulk density is preferably 0.25 g/mL or more and 0.50 g/mL or less, because the carbonaceous material tends to realize adsorption performance for various palladium complexes at an even higher level.

The shape of the carbonaceous material varies depending on the application and is not particularly limited. The shape includes, for example, powdered, lumpy, crushed, spherical, cylindrical, elliptical, elliptical pyramidal, and rod shapes including polygonal columns such as triangular, square, pentagonal, and hexagonal columns, pellet shapes such as solid and hollow pellets, substrates (sheets), and block shapes.

The powdered carbonaceous material is used, for example, for batch processing and as a raw material for a molded body. In the present specification, the term "powdered" refers to, for example, fine powder, powder, fine particles, and granular powder, and the 50% particle size (D50) in the volume-based cumulative distribution is generally 1 µm or more and 150 µm or less.

The crushed carbonaceous material is used for, for example, a flow-through treatment, a column for chromatography, and the like. In the present specification, the term "crushed" refers to particles of any shape that is not uniform and is usually angular.

For example, when the carbonaceous material is used for a column or the like, the shape thereof is preferably cylindrical. In the present specification, the term "cylindrical" does not need to be a geometrically strict cylinder, and includes a columnar shape in which a cross-sectional shape of a plane perpendicular to the central axis of the cylinder (hereinafter, simply referred to as "cross-sectional shape") is oval, circular or elliptical. In the present specification, circular or elliptical refers to, for example, a shape in which the ratio of a long axis to a short axis (long axis / short axis) of the shape is 3 or less. Since the carbonaceous material can be packed into a column or the like at a higher density, the cross-sectional shape is preferably circular or elliptical.

When the carbonaceous material is cylindrical, the diameter of the cross-sectional shape varies depending on the intended use. For example, when the carbonaceous material is used in a column or the like, the diameter is usually about 1.0 mm or more and about 10.0 mm or less. In the present specification, the "diameter" refers to the diameter of a circle when the cross-sectional shape is circular. On the other hand, when the cross-sectional shape is oval, oblong, or elliptical, the "diameter" refers to the longest direction (that is, the major axis direction) in the shape. In the present specification, the "circular" encompasses not only a perfect circle but also oval and elliptical.

When the carbonaceous material is cylindrical, the length in the longitudinal direction of the cylinder varies depending on the intended use. For example, when the carbonaceous material is used in a column or the like, the length is usually about 1.0 mm to about 20.0 mm.

When the carbonaceous material has a pellet shape, the plan view shape thereof may be, for example, a shape applicable to a column or the like. Examples of such shapes include, in plan view, circular, elliptical, rectangular, rod-like, and curved. When the carbonaceous material has a pellet shape, the thickness thereof is not particularly limited, and may be determined with reference to known adsorbents applicable to a column or the like. The thickness is preferably a thickness that is applicable to a column or the like, and is usually 100 µm or more and 10,000 µm or less.

When the carbonaceous material has a cylindrical pellet shape, the diameters of the pellets are preferably 2 mm or more and 10 mm or less, and the aspect ratio is preferably 1:1 to 1:10. Such pellets are suitable as an adsorbent in a column or the like. In the present specification, the aspect ratio refers to a ratio of the diameter and the height of one carbonaceous material, that is, the diameter of the carbonaceous material:the height of the carbonaceous material. The aspect ratio refers to an average value of aspect ratios of 30 carbonaceous materials randomly collected.

The carbonaceous material is preferably activated carbon.

### [Method for Producing Carbonaceous Material]

The carbonaceous material of the present embodiment can be obtained by a known production method.

Examples of such a method include a thermal decomposition method, an activation method, a coating method, and a vapor deposition method. The activation method is preferably used as the production method. When these production methods are used, a carbonaceous material having a percentage of mesopores of 6.4% or more and 50.0% or less, a Reactive Black 5 value of 1.0 g/L or more and 8.0 g/L or less, and an iodine number of 1,000 mg/g or more and 1,600 mg/g or less tends to be produced more easily.

The method for producing the carbonaceous material of the present embodiment includes carbonizing a raw material to obtain a carbonized material and subjecting the carbonized material to an activation treatment to obtain an activated product. The method for producing the carbonaceous material of the present embodiment preferably includes washing the activated product.

### (Carbonization)

The method for producing a carbonaceous material includes carbonizing a raw material to obtain a carbonized material.

Any raw material can be used as long as it is a material from which a desired carbonaceous material can be obtained. Examples of the raw material include: plant-based or fossil-based raw materials such as wood, wood flour, fruit shells such as coconut shells, seeds such as palm kernels, plum pits, and peach pits, by-products in pulp production, bagasse, blackstrap molasses, coal (such as peat, lignite, brown coal, and bituminous coal), anthracite, petroleum distillation residues, petroleum pitch, coke, and coal tar; various synthetic resins such as phenol resin, vinyl chloride resin, vinyl acetate resin, melamine resin, urea resin, resorcinol resin, celluloid, epoxy resin, polyurethane resin, polyester resin, acrylic resin, and polyamide resin; synthetic rubbers such as polybutylene, polybutadiene, and polychloroprene; other synthetic wood; and synthetic pulp. These raw materials may be used alone, or two or more of them may be used in combination at any ratio according to the required specifications.

The raw material is preferably a natural product, and more preferably at least one selected from the group consisting of coconut shells and wood flour. When such a raw material is used, a carbonaceous material having a percentage of mesopores of 6.4% or more and 50.0% or less, a Reactive Black 5 value of 1.0 g/L or more and 8.0 g/L or less, and an iodine number of 1,000 mg/g or more and 1,600 mg/g or less tends to be produced more easily.

The raw material may contain additives or any other substances as necessary. The additives or any other substances may be added to the carbonized material as necessary.

Examples of such additives include water, coal tar, anhydrous tar, hard pitch, coal tar-based pitch, and petroleum-based pitch. The additives may be used alone, or two or more of them may be used in combination.

The additives are each blended in an amount of usually 1.0 part by mass or more and 50.0 parts by mass or less with respect to 100 parts by mass of the raw material or the carbonized material. The total amount of the additives is usually 1 part by mass or more and 100 parts by mass or less with respect to 100 parts by mass of the raw material or the carbonized material. When the raw material or the carbonized material is mixed with the additive, the oxygen amount of the raw material or the carbonized material may be controlled in advance within the range of 1.0 mass% or more and 20.0 mass% or less with respect to 100 mass% of the raw material or the carbonized material, as necessary. The oxygen amount can be controlled by, for example, mixing the raw material or the carbonized material with oxygen under heating at 150°C or more and 300°C or less.

The method for producing the carbonaceous material may include pulverizing or molding the raw material before carbonizing the raw material. Examples of this method include a method of pulverizing the raw material into a powder form with a known pulverizer before the carbonizing the raw material, and then carbonizing the powdered material. Another method includes molding the raw material into pellets by a known technique before carbonizing the raw material, and then carbonizing the pellets.

When the raw material is powdered, the particle size of the powder (50% particle size in a volume-based cumulative distribution, D50) is preferably 1 µm or more and 150 µm or less.

The raw material may be carbonized by any method, for example, by heating the raw material to 300°C or higher and 900°C or lower, preferably 400°C or higher and 800°C or lower, under oxygen-free conditions.

The carbonization time can be appropriately set depending on the raw material and the facility for carbonization. The carbonization time is, for example, 15 minutes or more and 20 hours or less, preferably 30 minutes or more and 10 hours or less. The carbonization can be performed using a known production equipment such as a rotary kiln. The carbonization may be performed at a pressure reduced by evacuation or in a nitrogen atmosphere.

The method for producing the carbonaceous material may include pulverizing the carbonized material into a powder form with a known pulverizer. This tends to make it easier to produce a carbonaceous material having a percentage of mesopores of 6.4% or more and 50.0% or less, a Reactive Black 5 value of 1.0 g/L or more and 8.0 g/L or less, and an iodine number of 1,000 mg/g or more and 1,600 mg/g or less. The method for producing the carbonaceous material may include pulverizing the carbonized material into powder, kneading the powdered carbonized material with an additive as necessary by a known technique, and molding the kneaded product by a known technique.

When the carbonized material is powdered, the carbonized material preferably has a particle size (50% particle size in a volume-based cumulative distribution, D50) of 1 µm or more and 150 µm or less.

In the method for producing the carbonaceous material, the carbonized material, the powdered carbonized material, the kneaded product, or the kneaded powdered product may be molded into cylindrical pellets by a known technique. This tends to make it easier to produce a carbonaceous material having a percentage of mesopores of 6.4% or more and 50.0% or less, a Reactive Black 5 value of 1.0 g/L or more and 8.0 g/L or less, and an iodine number of 1,000 mg/g or more and 1,600 mg/g or less.

When the carbonized material is molded into the cylindrical pellets, the diameter of the cylindrical pellet is preferably 0.1 mm or more and 4.0 mm or less. The aspect ratio (diameter:height) of the cylindrical pellet is preferably 1:1 to 1:10.

The carbonization provides a carbonized material as the raw material.

The method for producing the carbonaceous material may include washing and/or drying the carbonized material after the carbonization. The conditions for these steps are not particularly limited, and known conditions can be employed. Reference may also be made to the washing and drying described below.

### (Activation)

The method for producing the carbonaceous material includes subjecting the carbonized material to an activation treatment to obtain an activated product.

Any known method can be used to perform the activation treatment. Examples of such a method include an activation method using an activating gas such as water vapor, oxygen, and carbon dioxide. For the activation treatment, known production equipment such as a rotary kiln, a fluidized bed furnace, and a SLEP furnace (vertical furnace) can be used. The activation treatment may be performed at a pressure reduced by evacuation or in a nitrogen atmosphere. The activation treatment includes, for example, in the case of using water vapor, a method in which the water vapor is brought into contact with the carbonized material at a flow rate of 10 liters (L) or more and 300 liters (L) or less per minute for 1 minute or more and 1,440 minutes or less. An inert gas such as nitrogen may be used in combination with the activating gas.

The activation treatment is preferably performed using the rotary kiln. When the rotary kiln is used, the activated product that had its mass reduced with the progress of the activation of the carbonized material is not scattered outside the kiln and can stay in the furnace of the kiln. Accordingly, the carbonized material can be activated more sufficiently, which tends to provide an activated product in which pores effective for adsorption of the palladium complex are satisfactorily developed.

Use of the rotary kiln efficiently brings the carbonized material and activating gas into contact with each other. As a result, a carbonaceous material which exhibits high adsorption performance for various palladium complexes such as palladium catalysts tends to be suitably produced.

When the activation treatment is performed using the rotary kiln, the carbonized material to be charged in the rotary kiln preferably has a particle size retained on a 70 mesh sieve (aperture size: 243 µm) and passing through a 2 mesh sieve (aperture size: 10.7 mm), more preferably a particle size retained on a 32 mesh sieve (aperture size: 490 µm) and passing through a 2 mesh sieve (aperture size: 10.7 mm), in accordance with JIS Z 8801-1:2019 specifying test sieves of metal wire cloth. When the particle size of the carbonized material is within the above range, the activated product that has its mass reduced with the progress of the activation of the carbonized material can remain in the kiln, allowing more effective activation. As the carbonized material, a carbonized material having a particle size adjusted by cutting a raw material into a desired size before the carbonization may be used, or a carbonized material having a particle size adjusted by crushing and classifying the carbonized material into a desired size may be used.

The temperature at which the activation treatment is performed is not particularly limited, but is preferably 750°C or higher and 1,200°C or lower, more preferably 800°C or higher and 1,100°C or lower. When the activation treatment is performed at such a temperature, a carbonaceous material having a percentage of mesopores of 6.4% or more and 50.0% or less, a Reactive Black 5 value of 1.0 g/L or more and 8.0 g/L or less, and an iodine number of 1,000 mg/g or more and 1,600 mg/g or less tends to be produced more easily.

The partial pressure of the activating gas is, for example, 10% or more and 100% or less, preferably 30% or more and 100% or less.

As the activating gas, it is preferable to use oxygen gas and carbon dioxide gas together with water vapor gas. In this case, the partial pressure of the water vapor gas is preferably more than 40.0 vol% and 60.0 vol% or less, more preferably 45.0 vol% or more and 55.0 vol% or less. The partial pressure of the oxygen gas is preferably more than 5.0 vol% and 20.0 vol% or less, more preferably 7.0 vol% or more and 15.0 vol% or less. The partial pressure of carbon dioxide gas is preferably 1.0 vol% or more and 15.0 vol% or less, more preferably 3.0 vol% or more and 10.0 vol% or less. Note that an inert gas such as nitrogen may be contained as another gas. In this case, the partial pressure of the inert gas is preferably 5.0 vol% or more and less than 54.0 vol%, more preferably 20.0 vol% or more and 25.0 vol% or less. When the ratio of each gases is within the above range, a carbonaceous material having a percentage of mesopores of 6.4% or more and 50.0% or less, a Reactive Black 5 value of 1.0 g/L or more and 8.0 g/L or less, and an iodine number of 1,000 mg/g or more and 1,600 mg/g or less tends to be produced more easily.

The activation time can be appropriately set depending on the conditions such as the type of the raw material, the activation temperature, and the production equipment. The activation time is, for example, 20 minutes or more and 48 hours or less, preferably 30 minutes or more and 36 hours or less, more preferably 40 minutes or more and 24 hours or less, much more preferably 45 minutes or more and 120 minutes or less, and still more preferably 50 minutes or more and 100 minutes or less. When the activation time is within the above range, a carbonaceous material having a percentage of mesopores of 6.4% or more and 50.0% or less, a Reactive Black 5 value of 1.0 g/L or more and 8.0 g/L or less, and an iodine number of 1,000 mg/g or more and 1,600 mg/g or less tends to be produced more easily.

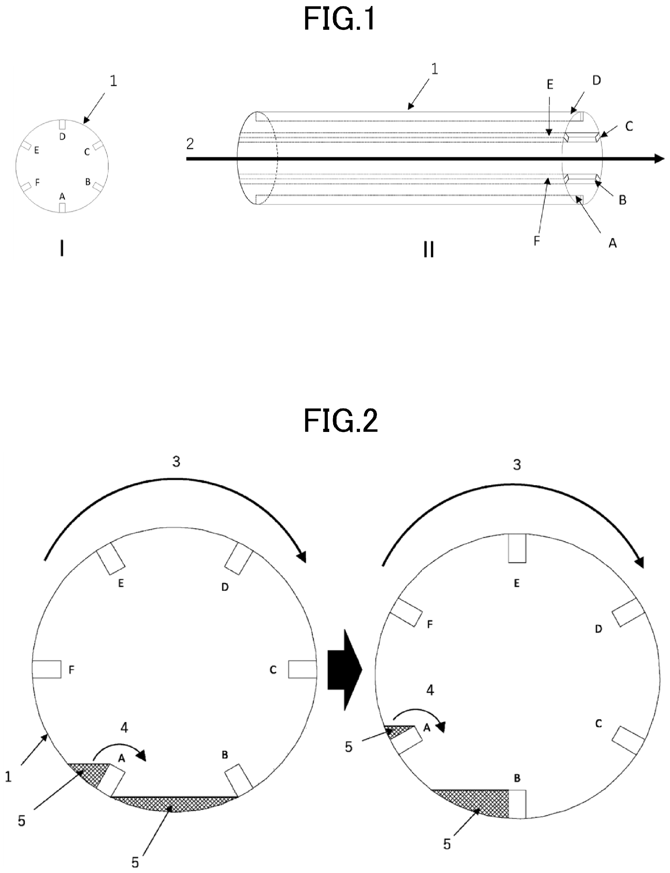

Examples of the activation apparatus for performing the activation treatment include a rotary kiln as shown in FIGS. 1 and 2. FIG. 1 shows a cross-sectional view I and a side view II of a rotary kiln. FIG. 2 is a schematic cross-sectional view illustrating the rotary kiln.

As shown in FIGS. 1 and 2, the rotary kiln usually includes a tube 1 and stirring blades A to F disposed on an inner wall surface of the tube 1. The activating gas is generally fed from one side to the other, that is, in a flow direction 2 of the activating gas in the tube 1 of the rotary kiln as shown in FIGS. 1 and 2.

The material of the tube 1 is not particularly limited as long as being the material used for the rotary kiln, and may be, for example, stainless steel.

FIGS. 1 and 2 show six stirring blades, but the number of stirring blades can be appropriately changed according to the amount of a carbonized material 5 as a raw material to be charged. The number of stirring blades is generally 1 or more and 20 or less, preferably 3 or more and 12 or less, more preferably 5 or more and 10 or less. The stirring blades are preferably arranged at regular intervals around the center axis of the tube 1. For example, when six stirring blades are used, the stirring blades are arranged at 60° intervals around the center axis of the tube 1.

The height of each stirring blade (the height in the direction from the wall surface of the tube 1 toward the center) can be appropriately set according to the size of the tube 1 and the amount of the carbonized material 5 charged, and is preferably set so that the stirring blade is visible without being covered with the carbonized material 5 charged into the tube 1. Specifically, the height of the stirring blade is preferably controlled so that the stirring blade at the bottom of the tube 1 (at the position of the stirring blade B in the right diagram of FIG. 2) is covered with the carbonized material 5 by 1/2 or more and 2/3 or less from the bottom. The height of the stirring blade is more preferably 10% or more and 30% or less with respect to the inner radius of the tube 1.

The thickness of the stirring blade (the thickness in a rotation direction 3 of the tube 1) can be appropriately set according to the size of the tube 1 and the amount of the carbonized material 5 charged, and is preferably controlled so that the stirring blade has sufficient strength to avoid damage caused by the carbonized material 5 charged into the tube 1. Specifically, the thickness of the stirring blade is usually 1% or more and 100% or less, preferably 20% or more and 90% or less, more preferably 30% or more and 95% or less, with respect to the thickness of the wall of the tube 1.

The material of the stirring blade is not particularly limited as long as being the material used for the rotary kiln, and may be, for example, stainless steel.

The stirring blades arranged in this manner in the tube 1 tend to bring the carbonized material 5 and the activating gas into contact more efficiently. This tends to allow easier production of a carbonaceous material with a desired specific surface area.

As shown in FIG. 2, an appropriate amount of the carbonized material 5 is charged into the tube 1. When the tube 1 is rotated in the rotation direction 3, for example, the carbonized material 5 on the stirring blade A is lifted by the stirring blade A, stirred while passing over the stirring blade A in a falling direction 4 of the carbonized material, and collected between the stirring blades A and B while being activated by making contact with the activating gas. Due to the rotation of the tube 1, the carbonized material 5 is stirred while passing over the stirring blades A to F, and is activated by making contact with the activating gas efficiently and evenly. This tends to allow easier production of a carbonaceous material with a desired pore size distribution.

When the rotary kiln is used as the activation apparatus, a carbonaceous material having a percentage of mesopores of 6.4% or more and 50.0% or less, a Reactive Black 5 value of 1.0 g/L or more and 8.0 g/L or less, and an iodine number of 1,000 mg/g or more and 1,600 mg/g or less tends to be produced more easily.

The activation described above provides an activated product.

The method for producing a carbonaceous material may include washing and/or drying the activated product after the activation. The conditions for these steps are not particularly limited, and known conditions can be employed. Reference may also be made to the washing and drying described below.

### (Washing)

The carbonaceous material is preferably obtained through the washing the activated product obtained by the activation. The washing is more preferably carried out with acid. When the carbonaceous material is subjected to the washing, a carbonaceous material having a percentage of mesopores of 6.4% or more and 50.0% or less, a Reactive Black 5 value of 1.0 g/L or more and 8.0 g/L or less, and an iodine number of 1,000 mg/g or more and 1,600 mg/g or less tends to be produced more easily.

Examples of the acid used for acid washing include: mineral acids such as hydrochloric acid and nitric acid; and organic acids such as formic acid and acetic acid. The acids may be used alone, or two or more of them may be used in combination.

The acid concentration and the temperature and time for the acid washing may be appropriately adjusted to obtain the target carbonaceous material.

### (Drying)

The carbonaceous material is preferably obtained through the drying the washed product obtained by the washing.

Any known drying method such as natural drying, heat drying, or hot air drying can be used. The drying is preferably carried out under heating and/or reduced pressure. The drying under heating is preferably carried out by hot air because the product is dried evenly and stably. The drying is preferably performed until the moisture content of the carbonaceous material reaches 20.0 mass% or less, more preferably 10.0 mass% or less, under the drying conditions.

Examples of the heating method include a heating method using a stationary constant-temperature dryer, a stationary hot-air dryer, a vacuum dryer, a rotary evaporator, or an agitated dryer such as a conical dryer and a Nauta dryer. The heating may be performed at any temperature at which the carbonaceous material is cured and is not melted, preferably, for example, 40°C or more and 300°C or less.

The method for reducing the pressure can be, for example, a method using an oil pump, an oilless pump, an aspirator, or the like. The pressure in the pressure reduction method is generally 0.00001 MPa or more and 0.05 MPa or less.

The drying time varies depending on the drying temperature, but is usually about 1 minute or more and 20 hours or less.

The carbonaceous material thus obtained may be used as it is, or may optionally be subjected to particle size adjustment by crushing, pulverization, and classification, purification by additional washing using, for example, water, an organic solvent, an aqueous acid solution, or an aqueous alkali solution, and additional heat treatment for imparting durability and structure adjustment as necessary by known methods.

### [Applications]

The carbonaceous material can be suitably used for various applications for the removal, adsorption, concentration, and recovery of various palladium complexes such as palladium catalysts. The applications may include a combination of removal, adsorption, concentration, and recovery as appropriate. Examples of such applications include wastewater treatment, waste oil treatment, recovery of catalysts from reaction solutions, decolorization of products, removal of impurities from reaction solutions, concentration, and adsorption.

The carbonaceous material is suitably used for adsorption of a palladium complex in an organic solvent. The carbonaceous material is more suitably used for adsorption of a zero-valent palladium complex and/or a divalent palladium complex in an organic solvent.

Examples of the zero-valent palladium complex include bis(dibenzylideneacetone)palladium(0) and tetrakis(triphenylphosphine)palladium(0). The zero-valent palladium complex is preferably bis(dibenzylideneacetone)palladium(0) because it has higher adsorption performance.

Examples of the divalent palladium complex include palladium(II) acetate, palladium(II) chloride, and dichlorobis(triphenylphosphine)palladium(II). The divalent palladium complex is preferably palladium(II) acetate because it has higher adsorption performance.

Examples of the organic solvent include methylene chloride, chloroform, carbon tetrachloride, ethylene chloride, trichloroethylene, tetrachloroethylene, o-dichlorobenzene, m-dichlorobenzene, Freon-112, Freon-113, HCFC, HFC, propyl bromide, butyl iodide, acetic acid, methyl acetate, ethyl acetate, propyl acetate, butyl acetate, methyl methacrylate, diethyl carbonate, ethyl formate, diethyl ether, dipropyl ether, tetrahydrofuran, dibutyl ether, anisole, methanol, ethanol, isopropanol, n-butanol, 2-butanol, isobutanol, t-butanol, allyl alcohol, pentanol, heptanol, ethylene glycol, diethylene glycol, phenol, o-cresol, m-cresol, p-cresol, xylenol, acetaldehyde, acetone, methyl ethyl ketone, methyl isobutyl ketone, cyclohexanone, phorone, acetonitrile, acrylonitrile, n-hexane, isohexane, cyclohexane, methylcyclohexane, n-heptane, n-octane, n-nonane, isononane, decane, dodecane, undecane, tetradecane, decalin, benzene, toluene, m-xylene, o-xylene, p-xylene, ethylbenzene, 1,3,5-trimethylbenzene, n-methylpyrrolidone, dimethylformamide, dimethylacetamide, and dimethyl sulfoxide. These organic solvents may be used alone or in a mixture of two or more thereof.

### [Method for Adsorbing Palladium Complex]

The method for adsorbing a palladium complex of the present embodiment includes adsorbing a palladium complex on a carbonaceous material. Examples of the method for adsorbing a palladium complex include a method in which the palladium complex is adsorbed on the carbonaceous material to concentrate the palladium complex in the carbonaceous material. The method for the concentration may include the same steps as those of a known adsorption method, concentration method, recovery method, and the like for metallic palladium, in addition to using the carbonaceous material of the present embodiment as the carbonaceous material.

In the adsorption, for example, the palladium complex is brought into contact with the carbonaceous material to adsorb the palladium complex on the carbonaceous material.

### [Apparatus]

The apparatus includes the carbonaceous material. The apparatus may have the same configuration as a known apparatus except that the carbonaceous material of the present embodiment is used as the carbonaceous material.

The function of the carbonaceous material is used by the apparatus including the carbonaceous material. The apparatus is preferably a treatment apparatus. In the present specification, the "treatment apparatus" may be any apparatus capable of removing, adsorbing, concentrating, and recovering various palladium complexes such as palladium catalysts contained in a treatment target such as wastewater, a waste liquid, and oil by using the carbonaceous material of the present embodiment. Such a treatment apparatus may perform the removal, the adsorption, the concentration, and the recovery in combination as appropriate. Examples of the treatment apparatus include an apparatus having a filter, a column, a tank or bath, a tube, a cartridge, a cylinder, and a sheet each including the carbonaceous material (they may be hereinafter referred to as "a filter including the carbonaceous material"), a filtration apparatus, an adsorption apparatus, and a concentration apparatus.

The apparatus includes, for example, an adsorption unit for bringing the palladium complex and the carbonaceous material into contact with each other. The adsorption unit may contain an adsorbent other than the carbonaceous material of the present embodiment, as necessary. Examples of the adsorbent include activated carbon other than the carbonaceous material of the present embodiment, zeolite, silica gel, activated alumina, nonwoven fabric, and porous organic compounds.

Examples of the filtration apparatus include a cartridge type filtration apparatus, a membrane treatment apparatus, and an ultrafiltration membrane apparatus, each of which contains the carbonaceous material.

The treatment apparatus may include other adsorption filters together with the sorption filter containing the carbonaceous material. Examples of the other adsorption filters include metal filters made of stainless steel, aluminum, bronze, copper, titanium, and nickel; and resin filters made of polypropylene, polyvinyl chloride, polyvinylidene chloride, polyethylene, polyamide, and fluorine-based resin.

The treatment apparatus may be a batch treatment apparatus or a continuous treatment apparatus, and the carbonaceous material can be used in either apparatus.

### Examples

The present invention will be described in more detail with reference to examples and comparative examples, but the present invention is not limited to the examples.

### [Evaluation Method]

### (1) BET Specific Surface Area

The specific surface area (m²/g) of the carbonaceous material determined by the BET method from the N₂ adsorption isotherm at -196°C was measured.

Specifically, the BET specific surface area (m²/g) was determined as follows. First, using a specific surface area/pore size distribution analyzer (BELSORP (registered trademark)-mini II (trade name)) manufactured by MicrotracBEL Corp.), the carbonaceous material was heated at 250°C for 3 hours under reduced pressure (degree of vacuum: 0.1 kPa or less), and then a nitrogen gas adsorption isotherm of the carbonaceous material at -196°C was measured. BET analysis was performed on the obtained nitrogen adsorption isotherm to obtain a straight line with a relative pressure P / P0 of 0.01 or more and 0.10 or less by a multi-point method, and the BET specific surface area was calculated from the straight line.

### (2) Mesopore Volume

The pore volume (cm³/g) of the mesopores of the carbonaceous material was determined by the BJH method from the N₂ adsorption isotherm at -196°C. Specifically, the nitrogen adsorption isotherm used in the calculation of the BET specific surface area was used, and a curve with the relative pressure P / P0 of 0.385 or more and 0.99 or less was obtained by BJH analysis. From the obtained curve, the cumulative pore volume for each pore size was calculated, and the pore volume of mesopores with a pore size of 2.0 nm or more and 50.0 nm or less was calculated by subtracting the cumulative pore volume of pores with the pore size up to 2.0 nm from the cumulative pore volume of pores with the pore size up to 50.0 nm.

### (3) BJH Specific Surface Area

The specific surface area (m²/g) of the carbonaceous material was determined by the BJH method from the N₂ adsorption isotherm at -196°C. The BJH specific surface area is a specific surface area determined from the pore volume and pore size of the carbonaceous material calculated based on the BJH method.

Specifically, the nitrogen adsorption isotherm used in the calculation of the BET specific surface area was used, and a curve with the relative pressure P / P0 of 0.385 or more and 0.99 or less was obtained by BJH analysis. From the obtained curve, the mesopore volumes were calculated for the respective pore sizes in the range of 2.0 nm or more and 50.0 nm or less, and the specific surface areas were calculated using these values and the following equation (I). The BJH specific surface area of the carbonaceous material was calculated by adding the obtained specific surface areas for the respective pore sizes. $Ap = 2 \times Vp / \left(rp\times {10}^{7}\right) \times 0.0001$ (I)

In the equation (I), Ap represents a specific surface area (m²/g) at a certain pore size, Vp represents a pore volume (cm³/g) at the certain pore size, and rp represents the pore size (nm).

### (4) Percentage of Mesopores

The percentage (%) of mesopores of the carbonaceous material was calculated. Specifically, the percentage (%) of mesopores of the carbonaceous material was calculated from the following equation (II) using the obtained BET specific surface area (m²/g) and BJH specific surface area (m²/g). $Percentage of mesopores = BJH specific surface area / BET specific surface area \times 100$ (II)

### (5) Reactive Black 5 Value

The Reactive Black 5 value (g/L) of the carbonaceous material was measured.

Specifically, first, the carbonaceous material was pulverized so that the 50% particle size (D50) in the volume-based cumulative distribution was about 10.0 µm or less, and dried in a constant-temperature drier (DVS402 (trade name) manufactured by Yamato Scientific Co., Ltd.) at 115°C for 3 hours. Then, the dried product was allowed to cool to room temperature in a desiccator using silica gel as a drying agent to obtain a cooled carbonaceous material.

A test solution A containing a phosphate buffer and Reactive Black 5 (manufactured by Sigma-Aldrich) was prepared in the following manner. Specifically, first, 7.26 g of potassium dihydrogen phosphate (manufactured by FUJIFILM Wako Pure Chemical Corporation) and 28.66 g of disodium hydrogen phosphate dodecahydrate (manufactured by FUJIFILM Wako Pure Chemical Corporation) were dissolved in 2 L of distilled water to prepare a phosphate buffer (pH: 7.0). Thereafter, Reactive Black 5 was added in an amount in the range of about 0.5 g or more and 1.2 g or less to 1 L of the resulting phosphate buffer to prepare the test solution A. In this case, the amount of Reactive Black 5 was controlled as follows. Specifically, the amount of Reactive Black 5 added to 1 L of the phosphate buffer was appropriately controlled so that the absorbance of the resulting test solution A diluted 20-fold with distilled water was 1.18 or more and 1.23 or less. The absorbance was measured at a wavelength of 594 nm using a glass cell with an optical path length of 10 mm and an ultraviolet and visible spectrophotometer (double-beam spectrophotometer U-2910 (trade name) manufactured by Hitachi High-Tech Corporation). The 20-fold diluted solution of the test solution A obtained as described above was used as a test solution B for the following absorbance measurement.

Next, an arbitrary mass of the cooled carbonaceous material was taken (a mass at which the residual ratio of Reactive Black 5 in the filtrate was about 10% according to the following equation (IV)) in a 100 mL stoppered Erlenmeyer flask, the carbonaceous material was added to 50 mL of the test solution A prepared above, and the flask was shaken in a water bath using a shaking thermostatic bath (water bath shaker MM-10 (trade name) manufactured by TAITEC CORPORATION) at a rate of 150 times/min and 40°C for 5 hours to obtain a liquid mixture. The liquid mixture was then filtered with a membrane filter (DISMIC (registered trademark) 25HP045AN (trade name) manufactured by TOYO ROSHI KAISHA, LTD.) to obtain a filtrate.

The absorbances of the test solution B and the filtrate were measured at a wavelength of 594 nm using a glass cell with an optical path length of 10 mm and an ultraviolet and visible spectrophotometer (double-beam spectrophotometer U-2910 (trade name) manufactured by Hitachi High-Tech Corporation). Using these absorbances, the adsorption amount of Reactive Black 5 per g of the carbonaceous material (hereinafter, referred to as "RB5 adsorption amount per g of carbonaceous material (/g)") was calculated by the following equation (III). 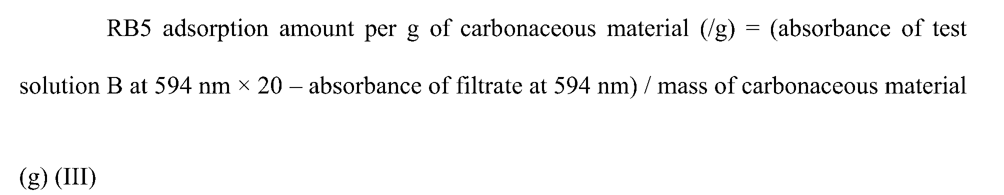 RB5 adsorption amount per g of carbonaceous material (/g) = (absorbance of test solution B at 594 nm × 20 - absorbance of filtrate at 594 nm) / mass of carbonaceous material (g) (III)

The residual ratio of Reactive Black 5 in the filtrate (hereinafter, simply referred to as "RB5 residual ratio (%)") was calculated by the following equation (IV). 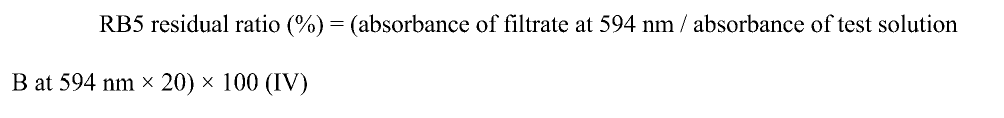 RB5 residual ratio (%) = (absorbance of filtrate at 594 nm / absorbance of test solution B at 594 nm × 20) × 100 (IV)

Next, a power approximation curve was created with the RB5 residual ratio (%) on the horizontal axis and the RB5 adsorption amount per g of the carbonaceous material (/g) on the vertical axis. The adsorption amount of Reactive Black 5 when the Reactive Black 5 residual ratio was 1% (hereinafter, simply referred to as "RB5 adsorption amount (/g) at 1% RB5 residual ratio") was determined using the power-law approximation equation, and the Reactive Black 5 value (g/L) was calculated by the equation (V). 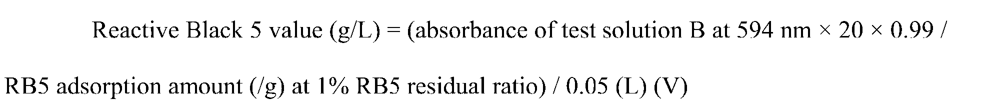 Reactive Black 5 value (g/L) = (absorbance of test solution B at 594 nm × 20 × 0.99 / RB5 adsorption amount (/g) at 1% RB5 residual ratio) / 0.05 (L) (V)

In the equation (V), 0.05 (L) is the amount of the test solution.

### (6) Iodine number (Iodine Adsorption Performance)

The iodine number (mg/g) of the carbonaceous material was measured and calculated.

Specifically, the iodine number was measured in accordance with JIS K 1474 (2014). First, according to JIS Z 8801-1, the carbonaceous material was pulverized until 90% or more of the carbonaceous material passed through a 45 µm mesh sieve, and then dried in a constant-temperature drier (DVS402 (trade name) manufactured by Yamato Scientific Co., Ltd.) at 115°C for 3 hours. Then, the dried product was allowed to cool to room temperature in a desiccator using silica gel as a drying agent to obtain a cooled carbonaceous material.

An iodine solution was prepared by dissolving 25.0 g of potassium iodide (manufactured by FUJIFILM Wako Pure Chemical Corporation) and 13.0 g of iodine (manufactured by FUJIFILM Wako Pure Chemical Corporation) in approximately 1 L of distilled water. The iodine solution was titrated with a 0.1 mol/L sodium thiosulfate solution (manufactured by FUJIFILM Wako Pure Chemical Corporation), and distilled water was appropriately added to the iodine solution to prepare a 0.05 mol/L iodine solution.

Thereafter, an arbitrary amount of the cooled carbonaceous material (an amount at which a residual iodine concentration in a supernatant of a filtrate described later was about 2.5 g/L) was weighed and placed in a 100 mL stoppered Erlenmeyer flask, and 50 mL of the 0.05 mol/L iodine solution was added with a volumetric pipette. The resulting mixture was shaken at 200 times/min for 15 minutes using a shaker (a medium-sized reciprocating shaker NR-10 (trade name) manufactured by TAITEC CORPORATION) at room temperature (20°C or higher and 30°C or lower) to cause the carbonaceous material to adsorb iodine. Thus, a mixed solution was obtained. The mixed solution was filtered with a mixed cellulose ester membrane filter (A045A025A (trade name) manufactured by TOYO ROSHI KAISHA, LTD.) to obtain a filtrate. 10 mL of a supernatant of the filtrate was collected with a volumetric pipette and titrated with a 0.1 mol/L sodium thiosulfate solution (manufactured by FUJIFILM Wako Pure Chemical Corporation, factor: 1.000), and the residual iodine concentration was calculated by the following equation (VI). 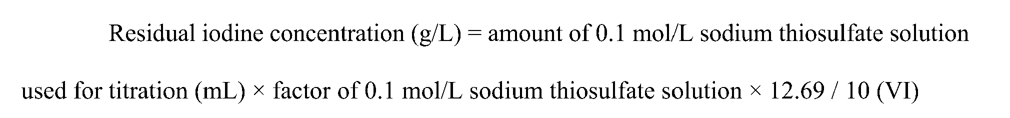 Residual iodine concentration (g/L) = amount of 0.1 mol/L sodium thiosulfate solution used for titration (mL) × factor of 0.1 mol/L sodium thiosulfate solution × 12.69 / 10 (VI)

The iodine number per g of the carbonaceous material was calculated by the following equation (VII). 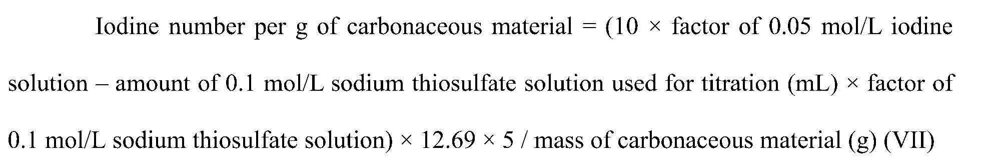 Iodine number per g of carbonaceous material = (10 × factor of 0.05 mol/L iodine solution - amount of 0.1 mol/L sodium thiosulfate solution used for titration (mL) × factor of 0.1 mol/L sodium thiosulfate solution) × 12.69 × 5 / mass of carbonaceous material (g) (VII)

The factor of the 0.05 mol/L iodine solution was calculated by the equation (VIII). 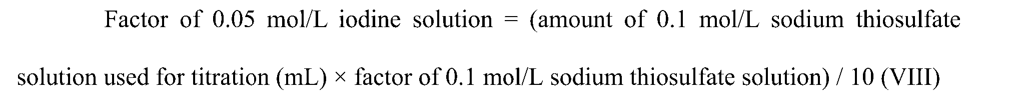 Factor of 0.05 mol/L iodine solution = (amount of 0.1 mol/L sodium thiosulfate solution used for titration (mL) × factor of 0.1 mol/L sodium thiosulfate solution) / 10 (VIII)

From the Freundlich adsorption isotherm, an adsorption isotherm was prepared with the residual iodine concentration on the horizontal axis and the iodine number per g of the carbonaceous material on the vertical axis, and the iodine number (mg/g) per g of the carbonaceous material at a residual iodine concentration of 2.5 g/L was calculated. The obtained iodine number was defined as the iodine adsorption performance.

### (7) pH

The pH of an aqueous suspension of the carbonaceous material was measured.

Specifically, first, in accordance with JIS K 1474 (2014), a carbonaceous material with a particle size of less than 150 µm was formed into powder, and a carbonaceous material with a particle size of 150 µm or more was formed into granules. Then, for the powdered carbonaceous material, 1.0 g was weighed in terms of dry mass, and for the granular carbonaceous material, 3.0 g was weighed in terms of dry mass.

Thereafter, the weighed carbonaceous material was added to a 100 mL tall beaker, and 100 mL of distilled water was further added thereto to obtain a liquid mixture. The resulting liquid mixture was gently boiled for 5 minutes using a hotplate (Ceramic Hotplate CHP-400DN (trade name), manufactured by AS ONE Corporation). Thereafter, the liquid mixture was cooled to room temperature, and added with distilled water so that the amount of the resultant liquid mixture became 100 mL, thereby obtaining a suspension. The pH of the resultant suspension was then measured with a pH meter (benchtop pH meter F-50 (trade name), manufactured by HORIBA, Ltd.).

### (8) Tapped Bulk Density

The tapped bulk density (g / mL) of the carbonaceous material, measured by a tapping method, was calculated.

Specifically, first, the carbonaceous material was pulverized so that the 50% particle size (D50) in the volume-based cumulative distribution was about 9.0 µm or more and 11.0 µm or less, and dried in a constant-temperature drier (DVS402 (trade name) manufactured by Yamato Scientific Co., Ltd.) at 115°C for 3 hours. Then, the dried product was allowed to cool to room temperature in a desiccator using silica gel as a drying agent to obtain a cooled carbonaceous material.

After cooling, 5.0 g of the carbonaceous material was weighed and divided into approximately three equal portions, and one of the portions (about 1/3) of the carbonaceous material was placed in a 150 mL graduated cylinder (internal diameter: 31mm, Tsutsui Scientific Instruments Co., Ltd.). The graduated cylinder with a rubber stopper attached was set in an automatic tapping machine (a powder volume loss measuring instrument TPM-3A (trade name) manufactured by Tsutsui Scientific Instruments Co., Ltd.), and the cylinder was tapped for one minute at a shaking amplitude of 45 mm and a shaking frequency of 35 to 36 times per minute. After the tapping was completed, the other one (about 1/3) of the previously divided three equal portions of the carbonaceous material was added to the graduated cylinder, the rubber stopper was attached, and the tapping was performed under the same conditions as described above for 1 minute. Thereafter, the last portion (about 1/3) of the previously divided three equal portions of the carbonaceous material was added to the graduated cylinder, the rubber stopper was attached, and the tapping was performed under the same conditions as described above for 30 minutes.

After the tapping was completed, the rubber stopper was removed, the top surface of the sample in the graduated cylinder was flattened with a spatula or any other suitable tool, and the volume (mL) of the sample was visually measured from the scale on the graduated cylinder. The measured sample volume was used to calculate the tapped bulk density measured by the tapping method according to the following equation (IX). 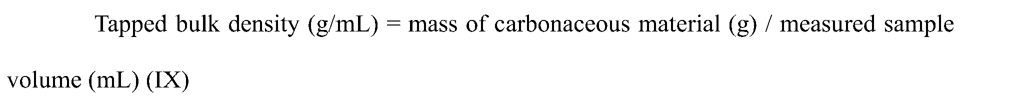 Tapped bulk density (g/mL) = mass of carbonaceous material (g) / measured sample volume (mL) (IX)

### (9) Removal Rate of Palladium(II) Complex

The adsorption performance of the carbonaceous material for a divalent palladium (palladium(II)) complex was measured.

Specifically, first, palladium(II) acetate (manufactured by FUJIFILM Wako Pure Chemical Corporation) was dissolved in toluene to prepare a palladium solution having a palladium concentration of 50 ppm (hereinafter, also simply referred to as "palladium(II) solution for adsorption performance measurement"). 25 mL of the palladium solution was placed in a 100 mL stoppered Erlenmeyer flask, and 0.5 g of the carbonaceous material was further added. Thereafter, the flask was shaken at 25°C for 1 hour using a shaking thermostat (Cool bath shaker ML-10F (trade name) manufactured by TAITEC CORPORATION), thereby obtaining a liquid mixture. The liquid mixture was then filtered with a membrane filter (DISMIC (registered trademark) 25HP (trade name) manufactured by TOYO ROSHI KAISHA, LTD.), thereby obtaining a filtrate.

The absorbances of the palladium(II) solution for adsorption performance measurement and the obtained filtrate at 393 nm were measured using a glass cell with an optical path length of 1 mm and an ultraviolet and visible spectrophotometer (double-beam spectrophotometer U-2910 (trade name) manufactured by Hitachi High-Tech Corporation). Using the absorbances and a calibration curve prepared in advance, the residual concentrations (ppm) of palladium(II) complex in the palladium(II) solution for adsorption performance measurement and the obtained filtrate were calculated. The calibration curve was created as follows. That is, a palladium solution having a concentration of the palladium(II) complex of 50 ppm was diluted 5-fold, 50-fold, and 100-fold with toluene, to prepare solutions. Thereafter, the absorbances at the 393 nm were measured using these solutions in the same manner as in the above measurement method, and the calibration curve was created based on the results of the measurements.

Next, the removal rate (%) of the palladium(II) complex was calculated by the following equation (X) using the residual concentration (ppm) of the obtained palladium(II) complex. The removal rate of the palladium(II) complex was defined as the adsorption performance of the carbonaceous material for the palladium(II) complex. 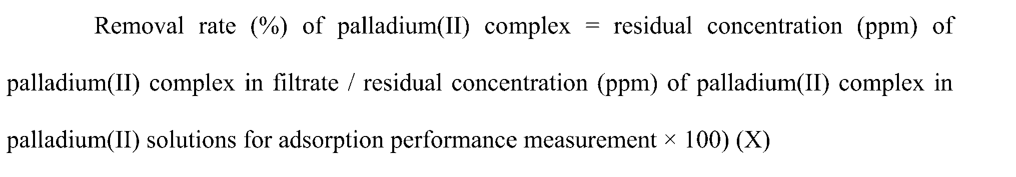 Removal rate (%) of palladium(II) complex = residual concentration (ppm) of palladium(II) complex in filtrate / residual concentration (ppm) of palladium(II) complex in palladium(II) solutions for adsorption performance measurement × 100) (X)

### (10) Removal Rate of Palladium(0) Complex

The adsorption performance of the carbonaceous material for a zero-valent palladium (palladium(0)) complex was measured.

Specifically, first, bis(dibenzylideneacetone)palladium(0) (manufactured by FUJIFILM Wako Pure Chemical Corporation) was dissolved in toluene to prepare a palladium solution having a palladium concentration of 50 ppm (hereinafter, also simply referred to as "palladium(II) solution for adsorption performance measurement"). 25 mL of the palladium solution was placed in a 100 mL stoppered Erlenmeyer flask, and 0.5 g of the carbonaceous material was further added. Thereafter, the flask was shaken at 25°C for 1 hour using a shaking thermostat (Cool bath shaker ML-10F (trade name) manufactured by TAITEC CORPORATION), thereby obtaining a liquid mixture. The liquid mixture was then filtered with a membrane filter (DISMIC (registered trademark) 25HP (trade name) manufactured by TOYO ROSHI KAISHA, LTD.), thereby obtaining a filtrate.

The absorbances of the palladium(0) solution for adsorption performance measurement and the obtained filtrate at 523 nm were measured using a glass cell with an optical path length of 1 mm and an ultraviolet and visible spectrophotometer (double-beam spectrophotometer U-2910 (trade name) manufactured by Hitachi High-Tech Corporation). Using the absorbances and a calibration curve prepared in advance, the residual concentrations (ppm) of palladium(0) complex in the palladium(0) solution for adsorption performance measurement and the obtained filtrate were calculated. The calibration curve was created as follows. That is, a palladium solution having a concentration of the palladium(0) complex of 50 ppm was diluted 5-fold, 50-fold, and 100-fold with toluene, to prepare solutions. Thereafter, the absorbances at the 523 nm were measured using these solutions in the same manner as in the above measurement method, and the calibration curve was created based on the results of the measurements.

Next, the removal rate (%) of the palladium(0) complex was calculated by the following equation (XI) using the residual concentration (ppm) of the obtained palladium(0) complex. The removal rate of the palladium(0) complex was defined as the adsorption performance of the carbonaceous material for the palladium(0) complex. 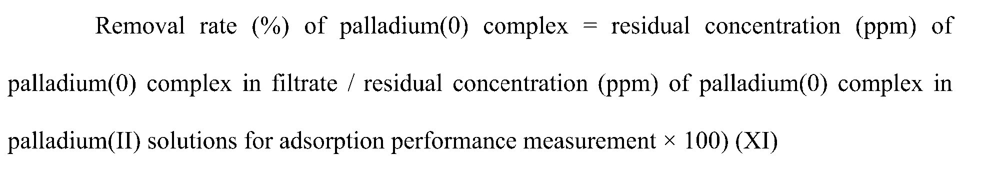 Removal rate (%) of palladium(0) complex = residual concentration (ppm) of palladium(0) complex in filtrate / residual concentration (ppm) of palladium(0) complex in palladium(II) solutions for adsorption performance measurement × 100) (XI)

### [Example 1]

### (Carbonization)

Wood flours from Japan and Malaysia were carbonized at a temperature of 550°C for about 8 hours to obtain carbonized materials.

### (Activation)

The each obtained carbonized material was placed in a rotary kiln as shown in FIGS. 1 and 2 having stirring blades in a furnace heated to 850°C in an amount of about 0.06 times the volume of 1 m³ of the rotary kiln. Thereafter, a gas (water vapor: 50.0 vol%, oxygen: 10.0 vol%, nitrogen: 35.0 vol%, carbon dioxide: 5.0 vol%) was introduced into the kiln rotating at a rotation speed of 3.0 rpm to perform an activation treatment for 60 minutes to obtain an activated product.

The rotary kiln had six stirring blades arranged at 60° intervals around the center axis of the tube. Each stirring blade had a height of 15% or more and 25% or less of the inner radius of the tube, and a thickness of 40% or more and 80% or less of the thickness of the tube.

### (Acid Washing, Drying, and Other Steps)

The obtained activated product was washed with diluted hydrochloric acid, sufficiently washed with water to remove residual hydrochloric acid, and dried to obtain a dried product. Thereafter, the obtained dried product was pulverized to obtain a pulverized carbonaceous material 1 as activated carbon.

### [Example 2]

A pulverized carbonaceous material 2 as activated carbon was obtained in the same manner as in Example 1 except that the activation treatment in the activation was performed for 80 minutes.

### [Example 3]

An activated product was obtained in the same manner as in Example 1. Thereafter, the obtained activated product was dried and pulverized in the same manner as in Example 1 except that washing was not performed, thereby obtaining a pulverized carbonaceous material 3 as activated carbon.

### [Example 4]

A pulverized carbonaceous material 4 as activated carbon was obtained in the same manner as in Example 1 except that the activation treatment in the activation was performed for 90 minutes.

### [Comparative Example 1]

### (Carbonization)

Coconut shells from the Philippines were carbonized at a temperature of 550°C for about 8 hours to obtain a carbonized material.

### (Activation)

The obtained carbonized material was placed in a rotary kiln as shown in FIGS. 1 and 2 having stirring blades in a furnace heated to 900°C in an amount of about 0.06 times the volume of 1 m³ of the rotary kiln. Thereafter, a gas (water vapor: 40.0 vol%, oxygen: 5.0 vol%, nitrogen: 50.0 vol%, and carbon dioxide: 5.0 vol%) was introduced into the kiln rotating at a rotation speed of 3.0 rpm to perform an activation treatment for 250 minutes to obtain an activated product.

The rotary kiln had six stirring blades arranged at 60° intervals around the center axis of the tube. Each stirring blade had a height of 15% or more and 25% or less of the inner radius of the tube, and a thickness of 40% or more and 80% or less of the thickness of the tube.

### (Acid Washing, Drying, and Other Steps)

The obtained activated product was acid-washed, dried, and pulverized in the same manner as in Example 1, thereby obtaining a pulverized carbonaceous material 5 as activated carbon.

### [Comparative Example 2]

A pulverized carbonaceous material 6 as activated carbon was obtained in the same manner as in Comparative Example 1 except that the activation treatment in the activation was performed for 130 minutes.

### [Comparative Example 3]

An activated product was obtained in the same manner as in Comparative Example 2. Thereafter, the obtained activated product was dried and pulverized in the same manner as in Example 1 except that washing was not performed, thereby obtaining a pulverized carbonaceous material 7 as activated carbon.

### [Comparative Example 4]

An activated product was obtained in the same manner as in Comparative Example 2. Thereafter, the obtained activated product was washed with dilute hydrochloric acid and then washed with dilute nitric acid. The obtained activated product was sufficiently washed with water to remove residual hydrochloric acid, and dried to obtain a dried product. Thereafter, the obtained dried product was pulverized to obtain a pulverized carbonaceous material 8 as activated carbon.

**[Table 1]**

| | Carbonaceous material | BET specific surface area | Mesopore volume | BJH specific surface area | Mesopore percentage | Reactive Black 5 value | Iodine adsorption performance | pH | Tapped bulk density | Removal rate of palladium (II) complex | Removal rate of palladium (0) complex |
|---|---|---|---|---|---|---|---|---|---|---|---|
| | | (m²/g) | (cm³/g) | (m²/g) | (%) | (g/L) | (mg/g) | (-) | (g/mL) | (%) | (%) |
| Example 1 | 1 | 1008 | 0.25 | 189 | 18.7 | 2.9 | 1050 | 6.8 | 0.39 | 81.9 | 97.4 |
| Example 2 | 2 | 1367 | 0.53 | 402 | 29.4 | 1.9 | 1280 | 7.0 | 0.28 | 96.8 | 98.7 |
| Example 3 | 3 | 1043 | 0.26 | 197 | 18.9 | 3.0 | 1060 | 6.7 | 0.39 | 84.9 | 97.7 |
| Example 4 | 4 | 1323 | 0.32 | 243 | 18.3 | 2.4 | 1360 | 7.4 | 0.33 | 83.6 | 98.3 |
| Comparative Example 1 | 5 | 1159 | 0.07 | 73 | 6.3 | 10.1 | 1190 | 8.0 | 0.56 | 62.8 | 91.1 |
| Comparative Example 2 | 6 | 847 | 0.04 | 36 | 4.2 | 33.1 | 960 | 6.6 | 0.67 | 36.5 | 53.8 |
| Comparative Example 3 | 7 | 914 | 0.00 | 35 | 3.8 | 18.4 | 950 | 9.7 | 0.56 | 95.9 | 66.6 |
| Comparative Example 4 | 8 | 787 | 0.04 | 33 | 4.2 | 80 or more | 730 | 4.0 | 0.60 | 60.3 | 70.7 |

### INDUSTRIAL APPLICABILITY

The carbonaceous material of the present embodiment can be suitably used for various applications for the removal, adsorption, concentration, and recovery of various palladium complexes such as palladium catalysts.

The present application is based on Japanese patent application filed on November 29, 2023 (Japanese Patent Application No. 2023-201657), the contents of which are incorporated herein by reference.

### DESCRIPTION OF REFERENCE CHARACTERS

- A, B, C, D, E, F: Stirring Blade
- 1: Tube
- 2: Flow Direction of Activating Gas
- 3: Rotation Direction of Tube
- 4: Falling Direction of Carbonized material
- 5: Carbonized material

## Claims

1. A carbonaceous material having
a percentage of mesopores of 6.4% or more and 50.0% or less,
a Reactive Black 5 value of 1.0 g/L or more and 8.0 g/L or less, and
an iodine number of 1,000 mg/g or more and 1,600 mg/g or less.

2. The carbonaceous material of claim 1, wherein
a pore volume of the mesopores determined by a BJH method from an N₂ adsorption isotherm at -196°C is 0.16 cm³/g or more and 0.60 cm³/g or less.

3. The carbonaceous material of claim 1, wherein
a specific surface area determined by a BET method from an N₂ adsorption isotherm at -196°C is 950 m²/g or more and 1,700 m²/g or less.

4. The carbonaceous material of claim 1, wherein
a specific surface area determined by a BJH method from an N₂ adsorption isotherm at -196°C is 23 m²/g or more and 500 m²/g or less.

5. The carbonaceous material of claim 1, wherein
a pH is 4.5 or more and 9.5 or less.

6. The carbonaceous material of claim 1, wherein
a tapped bulk density measured by a tapping method is 0.20 g/mL or more and 0.55 g/mL or less.

7. The carbonaceous material of any one of claims 1 to 6, for use in adsorption of a zero-valent palladium complex and/or a divalent palladium complex in an organic solvent.

8. A method for producing the carbonaceous material of any one of claims 1 to 6, the method comprising:
carbonizing a raw material to obtain a carbonized material; and
subjecting the carbonized material to an activation treatment to obtain an activated product.

9. The method of claim 8, further comprising:
washing the activated product.

10. The method of claim 8, wherein
the raw material is at least one selected from the group consisting of coconut shells and wood flour.

11. A method for adsorbing a palladium complex, the method comprising:
adsorbing a palladium complex on the carbonaceous material of any one of claims 1 to 6.
